# EUROPÄISCHE PATENTANMELDUNG

(11) **EP 0 579 999 A2**
(43) Veröffentlichungstag der Anmeldung: **26.01.1994**
(21) Anmeldenummer: 93110634.8
(22) Anmeldetag: 03.07.1993
(51) Int. Cl.: B01D 19/04, C08G 77/46

(54) **Entschäumungsmittel auf der Basis organofunktionell modifizierter Organopolysiloxane**

(30) Priorität: 18.07.1992 DE 4223768
(71) Anmelder: Th. Goldschmidt AG, D-45127 Essen (DE)
(72) Erfinder: Keup, Michael, Dr., D-45130 Essen (DE); Seyffert, Heribert, Dr., D-45133 Essen (DE); Sucker, Roland, D-59368 Werne (DE)

(57) **Zusammenfassung**

Mittel zum Entschäumen wäßriger, insbesondere alkalischer Zubereitungen auf der Basis von organofunktionell modifizierten Organopolysiloxanen und feinteiliger Kieselsäure, dadurch gekennzeichnet, daß es als organofunktionell modifizierte Organopolysiloxane Aminosiloxane, deren Aminogruppen über Si-C- oder SiOC-Bindungen mit dem Organopolysiloxan verbunden sind und bei denen das Verhältnis von Aminogruppen zu Si-Atomen des Organopolysiloxans 1 : 50 bis 1 : 500 beträgt, enthält.

## Beschreibung

Die Erfindung betrifft Mittel zum Entschäumen wäßriger, insbesondere alkalischer Zubereitungen auf der Basis von organofunktionell modifizierten Organopolysiloxanen und feinteiliger Kieselsäure.

Entschäumungsmittel der vorgenannten Art sind aus dem Stand der Technik bekannt und werden in erheblichem Umfang für technische Anwendungen benutzt. Stellvertretend für eine große Anzahl von diesen Gegenstand betreffenden Offenlegungs- und Patentschriften wird als nächstliegender Stand der Technik die EP-OS 0 404 698 genannt. In dieser Offenlegungsschrift werden Polydiorganosiloxane mit Amino- und Polyoxyalkylengruppen der durchschnittlichen Formel 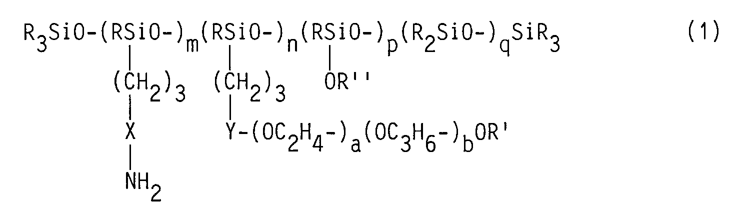
offenbart, in der
- R: ein Alkylrest mit 1 bis 4 Kohlenstoffatomen, ein Phenylrest oder ein Trifluor-3,3,3-propylrest ist, jedoch wenigstens 80 % der Reste R Methylreste sind,
- X: eine einfache kovalente Bindung oder ein zweiwertiger Rest der Formel

-O-CH₂-CH(OH)-CH₂-NH-W- (2)

ist,
- Y: eine einfache kovalente Bindung oder ein zweiwertiger Rest der Formel 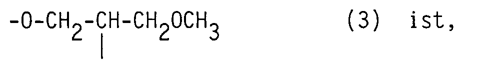 mit der Bedingung, daß, wenn p = 0 und X eine kovalente Bindung ist, Y ein Rest der Formel (3) ist,
- m: einen Wert von 1 bis 25, vorzugsweise von 1 bis 10 hat,
- n: einen Wert von 1 bis 25, vorzugsweise von 1 bis 10 hat,
- p: einen Wert von 0 bis 15, vorzugsweise von 1 bis 5 hat,
- q: einen Wert von 5 bis 500, vorzugsweise von 10 bis 400 hat,
- a: einen Wert von 0 bis 150 hat,
- b: einen Wert von 0 bis 150 hat,
- a+b: einen Wert von 5 bis 200 hat,
- W: ein zweiwertiger Kohlenwasserstoffrest mit 1 bis 6 Kohlenstoffatomen, wie -CH₂-, -(CH₂)₂-, -(CH₂)₃-, -(CH₂)₆- ist,
wobei der Rest -(CH₂)₂- bevorzugt ist,
- R': ein Wasserstoffrest, ein Alkyl- oder Acylrest mit 1 bis 6 Kohlenstoffatomen oder ein Phenylrest, vorzugsweise wie der Rest R ein Methylrest, ist,
- R'': ein geradkettiger oder verzweigter Alkylrest mit 1 bis 6 Kohlenstoffatomen, vorzugsweise der i-Propyl- und i-Butylrest, ist.

Aus den Indices der Formel (1) ergibt sich, daß das Verhältnis der Anzahl der Aminogruppen zu der Gesamtzahl der Siliciumatome 1 : 9 bis 1 : 23 beträgt.

Nachteile dieses relativ hohen Amingehaltes sind die relativ hohen Herstellkosten und die Eigenschaft der Aminogruppen, das emulsionsbrechende Potential von feinteiliger Kieselsäure zu verstärken.

Überraschenderweise wurde nun gefunden, daß man ausgezeichnete Entschäumer erhält, wenn man entgegen den bisherigen Vorstellungen aminofunktionelle Verbindungen einsetzt, deren Verhältnis Anzahl der Aminogruppen zu der Gesamtzahl der Si-Atome wesentlich niedriger ist, als man dies bisher als notwendig angesehen hat.

Gegenstand der Erfindung ist deshalb ein Mittel zum Entschäumen wäßriger, insbesondere alkalischer Zubereitungen auf der Basis von organofunktionell modifizierten Organopolysiloxanen und feinteiliger Kieselsäure, welches dadurch gekennzeichnet ist, daß es als organofunktionell modifizierte Organopolysiloxane Aminosiloxane, deren Aminogruppen über Si-C- oder SiOC-Bindungen mit dem Organopolysiloxan verbunden sind und bei denen das Verhältnis von Aminogruppen zu Si-Atomen des Organopolysiloxans 1 : 50 bis 1 : 500 beträgt, enthält.

Es war für den Fachmann in hohem Maße überraschend, daß bei einem so geringen Substitutionsgrad hochwirksame Entschäumungsmittel erhalten werden.

In einer bevorzugten Ausgestaltung der Erfindung enthält das Entschäumungsmittel als Aminosiloxane Verbindungen der allgemeinen Formel 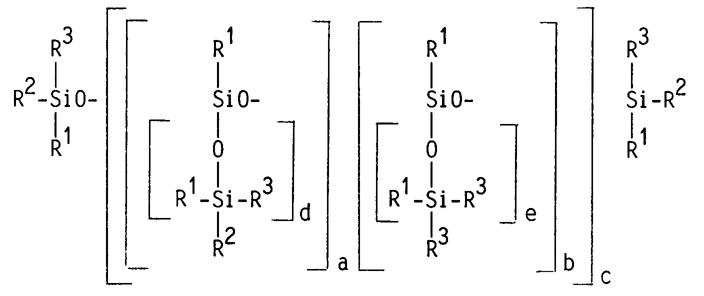
wobei die Reste
- R¹: im Molekül gleich oder verschieden sind und Alkylreste, Phenylreste, Alkoxyreste mit bis zu 18 Kohlenstoffatomen oder Hydroxylreste bedeuten, jedoch mindestens 90 % der Reste Methylreste sind,
- R²: im Molekül gleich oder verschieden sind und
(1) die Bedeutung der Reste R¹ haben oder
(2) organische Reste sind, die jeweils über ein Kohlenstoff- oder Sauerstoffatom mit einem Siliciumatom des Organopolysiloxans verbunden sind und eine Aminogruppe aufweisen,
- R³: im Molekül gleich oder verschieden sind und
(1) die Bedeutung der Reste R¹ haben oder
(2) Polyetherreste sind, die jeweils über ein Kohlenstoff- oder Sauerstoffatom mit einem Siliciumatom des Organopolysiloxans verbunden sind,
und die Indices
- a: einen Wert von 0 bis 5,
- b: einen Wert von 100 bis 500,
- c: einen Wert von 1 bis 5,
- d: einen Wert von 0 bis 5 und
- e: einen Wert von 0 bis 5 haben
wobei das Verhältnis der Zahl der Reste R² mit der Definition (2) zu der Gesamtzahl der Siliciumatome 1 : 50 bis 1 : 500 beträgt.

Beispiele für die Reste R¹ sind:
Alkylreste, wie Methyl-, Ethyl-, Propyl-, Butyl-, Hexyl-, Dodecyl-, iso-Propylreste; Phenylreste; Alkoxyreste, wie Ethoxy-, Butoxy-, Octadecyloxyreste; Hydroxylreste.

Vorzugsweise sind alle Reste R¹ Methylreste. R² hat dann gemäß Definition (1) vorzugsweise die Bedeutung eines Methylrestes, wobei jedoch im durchschnittlichen Organopolysiloxanmolekül die Anzahl der Reste R² gemäß Definition (2) so groß sein muß, daß die Bedingung, Verhältnis der Zahl der Reste R² zur Gesamtzahl der Si-Atome, anspruchsgemäß erfüllt ist.

Vorzugsweise weisen die Reste R² mit der Definition (2) die allgemeine Formel
-(CH₂)_{f}-NH₂, 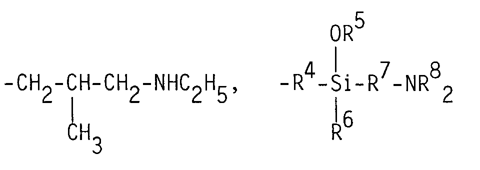
oder -(CH₂)₃NH(CH₂)₂NH₂
auf, wobei
- R⁴: ein Rest der Formel -(CH₂)ₑ-O- ist, in der e eine ganze Zahl von 3 bis 20 ist,
- R⁵: ein Alkylrest mit 1 bis 6 Kohlenstoffatomen ist,
- R⁶: ein Alkylrest mit 1 bis 4 Kohlenstoffatomen ist oder dem Rest OR⁵ entspricht,
- R⁷: ein Rest der Formel -CH₂-, -(CH₂)₂-NH-(CH₂)₃- oder 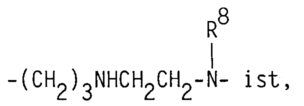
- R⁸: ein Alkylrest mit 1 bis 4 Kohlenstoffatomen oder ein Wasserstoffrest ist und
- f: einen Wert von 3 bis 20 hat.

Beispiele für Reste R² gemäß der Definition (2) sind
-(CH₂)₃-NH₂, -(CH₂)₆-NH₂ und 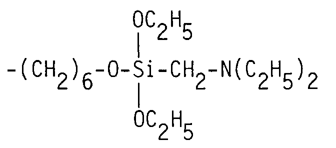
Die Reste R³ entsprechen den Resten R¹ oder sind Polyetherreste der Formel -O-(CₙH₂ₙO-)ₘR⁹ oder -R¹⁰-O-(CₙH₂ₙO-)ₘR⁹.

Dabei ist R⁹ ein Wasserstoffrest, ein Alkylrest mit 1 bis 4 Kohlenstoffatomen oder ein Acylrest, insbesondere ein Acetylrest.

R¹⁰ ist ein zweiwertiger aliphatischer Rest, insbesondere der -(CH₂)₂- oder -(CH₂)₃-Rest.
n hat einen Wert von 2 bis 3, vorzugsweise von 2,0 bis 2,7.
m hat einen durchschnittlichen Wert von 5 bis 100.

In der allgemeinen Formel des modifizierten Organopolysiloxans hat a einen Wert von 0 bis 5. Ist a = 0 bedeutet das, daß mindestens eine der endständigen Gruppen R² ein das Stickstoffatom aufweisender Substituent mit der Bedeutung (2) sein muß. Vorzugsweise ist a > O.

Der Index b hängt innerhalb der angegebenen Grenzen in seinem Wert von der Anzahl der Werte R² ab, damit die Bedingung R²(2) : Gesamtzahl Si-Atome gleich 1 : 50 bis 1 : 500 erfüllt wird.

Der Index c hat vorzugsweise einen Wert von 1 bis 2.

Die Indices d und e haben vorzugsweise einen Wert von 0 bis 3.

Ein weiterer Gegenstand der Erfindung ist ein Mittel, welches als Wirkstoff
10 bis 100 Gew.-% des Aminosiloxans und
0 bis 90 Gew.-% unmodifiziertes Organopolysiloxan
enthält, wobei der Wirkstoff in einem organischen Lösungsmittel gelöst sein kann, und das Mittel, bezogen auf Gesamtgewicht, 1,5 bis 10 Gew.-% Kieselsäure enthält.

Als Kieselsäure wird insbesondere pyrogen erhaltene Kieselsäure (im Handel als Aerosil erhältlich), welche in an sich bekannter Weise hydrophobiert sein kann, eingesetzt.

Das unmodifizierte Organopolysiloxan ist im allgemeinen ein lineares Dimethylpolysiloxan mit Si-Anzahl von 10 bis 1500. Das unmodifizierte Organopolysiloxan kann ganz oder teilweise durch ein Polyethersiloxan ersetzt sein, dessen Polyetherblöcke über Si-C- oder SiOC-Bindungen mit dem Siloxan verknüpft sind. Besonders bevorzugt sind solche Polyethersiloxane, deren Siloxanblock 10 bis 50 Si-Atome aufweist und dessen Polyetherblöcke aus Oxyethylen- und/oder gegebenenfalls Oxypropyleneinheiten bestehen und ein Molgewicht von etwa 400 bis 3000 aufweisen.

Die erfindungsgemäßen Entschäumungsmittel eignen sich insbesondere zum Entschäumen wäßriger alkalischer Zubereitungen, wie alkalische Tensidflotten, die u.a. in Färbereibädern eingesetzt werden. Sie werden vorzugsweise in Form einer O/W-Emulsion eingesetzt. Im allgemeinen genügt ein Zusatz des Entschäumungsmittels in einer Menge von 10 bis 1000 ppm Wirksubstanz der Formel I, bezogen auf zu entschäumendes Medium.

In den folgenden Beispielen werden die Herstellung und entschäumende Wirkung der erfindungsgemäßen Mittel noch detaillierter gezeigt.

### Beispiel 1

### Entschäumungsmittel 1:

965 g eines Siloxans der Formel

R-Si(CH₃)₂-(O-Si(CH₃)₂)ₙ-O-Si(CH₃)₂-R

mit n = 130 und R = -(CH₂)₃-NH₂, werden mit 35 g einer hydrophobierten Fällungskieselsäure (im Handel erhältlich unter der Bezeichnung Sipernat D10) versetzt und 1 Stunde unter Vakuum miteinander verrührt.

### Beispiel 2

### Entschäumungsmittel 2:

Herstellung des Entschäumungsmittels und allgemeine Formel des Siloxans wie in Beispiel 1 beschrieben, mit der Abweichung, daß n = 270 ist.

### Beispiel 3

### Entschäumungsmittel 3:

Herstellung des Entschäumungsmittels und allgemeine Formel des Siloxans wie in Beispiel 1 beschrieben, mit der Abweichung, daß n = 510 ist.

### Beispiel 4

### Entschäumungsmittel 4:

965 g eines Siloxans der Formel

(CH₃)₃-Si-(O-Si(CH₃)₂)ₙ-O-Si(CH₃)R-O-Si(CH₃)₃

mit n = 200 und R = -(CH₂)₃-NH₂, werden mit 35 g der oben bezeichneten hydrophobierten Kieselsäure versetzt und 1 Stunde unter Vakuum miteinander verrührt.

### Beispiel 5

### Entschäumungsmittel 5:

772 g eines Siloxans der Formel

(CH₃)₃-Si-(O-Si(CH₃)₂)ₙ-O-Si(CH₃)R-O-Si(CH₃)₃

mit n = 200 und R = -(CH₂)₃-NH₂, werden mit 193 g Polydimethylsiloxan einer Viskosität von 1000 mPas vermischt. Diese Mischung wird mit 35 g der oben bezeichneten hydrophobierten Kieselsäure versetzt und 1 Stunde unter Vakuum nachgerührt.

### Beispiel 6

### Entschäumungsmittel 6:

193 g eines Siloxans der Formel

(CH₃)₃-Si-(O-Si(CH₃)₂)ₙ-O-Si(CH₃)R-O-Si(CH₃)₃

mit n = 200 und R = -(CH₂)₃-NH₂, werden mit 772 g Polydimethylsiloxan einer Viskosität von 1000 mPas vermischt. Diese Mischung wird mit 35 g der oben bezeichneten hydrophobierten Kieselsäure versetzt und 1 Stunde unter Vakuum nachgerührt.

### Beispiel 7

### Entschäumungsmittel 7:

965 g eines Siloxans der Formel

(CH₃)₃-Si-(O-Si(CH₃)₂)ₙ-O-Si(CH₃)R-O-Si(CH₃)₃

mit n = 200 und R = -CH₂-CH(CH₃)-CH₂-NH-CH₂-CH₃, werden mit 35 g der oben bezeichneten hydrophobierten Kieselsäure versetzt und 1 Stunde unter Vakuum miteinander verrührt.

### Beispiel 8

### Entschäumungsmittel 8:

965 g eines Siloxans der Formel

(CH₃)₃-Si-(O-Si(CH₃)₂)ₙ-(O-Si(CH₃)R)₂-O-Si(CH₃)₃

mit n = 200 und R = -(CH₂)₆-O-Si(OC₂H₅)₂-(CH₂)₃-NH₂, werden mit 35 g der oben bezeichneten hydrophobierten Kieselsäure versetzt und 1 Stunde unter Vakuum miteinander verrührt.

### Beispiel 9 (nicht erfindungsgemäß)

### Entschäumungsmittel 9:

965 g Polydimethylsiloxan einer Viskosität von 1000 mPas werden mit 35 g der oben bezeichneten hydrophobierten Kieselsäure versetzt und 1 Stunde unter Vakuum miteinander verrührt.

### Beispiel 10 (nicht erfindungsgemäß)

### Entschäumungsmittel 10:

965 g eines Siloxans der Formel

R-Si(CH₃)₂-(O-Si(CH₃)₂)ₙ-O-Si(CH₃)₂-R

mit n = 60 und R = -(CH₂)₃-NH₂, werden mit 35 g der oben bezeichneten Kieselsäure versetzt und 1 Stunde unter Vakuum miteinander verrührt.

### Beispiel 11 (nicht erfindungsgemäß)

### Entschäumungsmittel 11:

965 g eines Siloxans der Formel

R-Si(CH₃)₂-(O-Si(CH₃)₂)ₙ-O-Si(CH₃)₂-R

mit n = 30 und R = -(CH₂)₃-NH₂, werden mit 35 g der oben bezeichneten Kieselsäure versetzt und 1 Stunde unter Vakuum miteinander verrührt.

### Beispiel 12 (nicht erfindungsgemäß)

### Entschäumungsmittel 12:

965 g eines Siloxans der Formel

Si(CH₃)₃-(O-Si(CH₃)₂)ₙ-(O-Si(CH₃)R)₂-O-Si(CH₃)₃

mit n = 50 und R = -(CH₂)₆-O-Si(OC₂H₅)₂-(CH₂)₃-NH₂, werden mit 35 g der oben bezeichneten Kieselsäure versetzt und 1 Stunde unter Vakuum miteinander verrührt.

### Beispiel 13 (nicht erfindungsgemäß)

### Entschäumungsmittel 13:

965 g eines Siloxans der Formel

Si(CH₃)₃-(O-Si(CH₃)₂)ₙ-O-Si(CH₃)R-O-Si(CH₃)₃

mit n = 30 und R = -(CH₂)₃-NH₂, werden mit 35 g der oben bezeichneten Kieselsäure versetzt und 1 Stunde unter Vakuum miteinander verrührt.

### Beispiel 14

### Entschäumungsmittel 14:

150 g einer Emulgatorlösung, bestehend aus
100 g Wasser,
25 g Polyoxyethylen-(6)-Tridecylalkohol und
25 g Polyoxyethylen-Triglycerid mit einem HLB von 18, werden mit
200 g Entschäumungsmittel 6 versetzt und mit einer geeigneten Homogenisiervorrichtung miteinander vermischt. Die so erhaltene Mischung wird mit Wasser bis auf einen Gehalt von 20 % an Entschäumungsmittel 6 verdünnt, wobei sich eine dünnflüssige, homogene Emulsion bildet.

### Beispiel 15

### Entschäumungsmittel 15:

200 g einer Emulgatorlösung, bestehend aus
100 g Wasser,
38 g Polyoxyethylen-(2)-Stearat und
62 g eines Polyoxyethylen-Polyoxypropylen-Blockcopolymeren mit einem Molekulargewicht von 12 000 g/Mol und 80 % Oxyethyleneinheiten, werden mit
400 g Entschäumungsmittel 5 versetzt und mit einer geeigneten Homogenisiervorrichtung miteinander vermischt. Die so erhaltene Mischung wird mit Wasser bis auf einen Gehalt von 40 % an Entschäumungsmittel 5 verdünnt, wobei sich eine dünnflüssige, homogene Emulsion bildet.

### Beispiel 16 (nicht erfindungsgemäß)

### Entschäumungsmittel 16:

150 g einer Emulgatorlösung, bestehend aus
100 g Wasser,
25 g Polyoxyethylen-(6)-Tridecylalkohol und
25 g Polyoxyethylen-Triglycerid mit einem HLB von 18, werden mit
200 g Entschäumungsmittel 9 versetzt und mit einer geeigneten Homogenisiervorrichtung miteinander vermischt. Die so erhaltene Mischung wird mit Wasser bis auf einen Gehalt von 20 % an Entschäumungsmittel 9 verdünnt, wobei sich eine dünnflüssige, homogene Emulsion bildet.

### Beispiel 17 (nicht erfindungsgemäß)

### Entschäumungsmittel 17:

200 g einer Emulgatorlösung, bestehend aus
100 g Wasser,
38 g Polyoxyethylen-(2)-Stearat und
62 g eines Oxvethylen-Oxypropylen-Blockcopolymeren mit einem Moleku
largewicht von 12 000 g/Mol und 80 % Oxyethyleneinheiten, werden mit
400 g Entschäumungsmittel 11 versetzt und mit einer geeigneten Homogenisiervorrichtung miteinander vermischt. Die so erhaltene Mischung wird mit Wasser bis auf einen Gehalt von 40 % an Entschäumungsmittel 11 verdünnt, wobei sich eine dünnflüssige, homogene Emulsion bildet.

Die in den Beispielen beschriebenen Entschäumungsmittel 1 bis 17 werden in dem nachfolgend beschriebenen Testverfahren untersucht:

In einen graduierten 2-l-Meßzylinder wird 1 l einer 1 %igen, im Handel unter der Bezeichnung Sincal F erhältlichen Lösung gegeben. Sincal F-Lösung besteht aus nichtionischen und anionischen Tensiden.

Diese Tensidlösung wird mittels einer Fritte der Porosität 1 bei einem Luftvolumenstrom von 6 l/Min. begast. Sobald sich im Meßzylinder ein Schaumvolumen von 1000 ml gebildet hat, werden 0,2 g einer 10 %igen Verdünnung des Entschäumungsmittels dazugegeben. Der Schaum bricht daraufhin zusammen und baut sich nach einiger Zeit wieder auf ein Volumen von 1000 ml auf, worauf die nächste Entschäumerdosierung erfolgt. Die Dauer des Tests beträgt 60 Minuten. Die Anzahl der Dosierungen an Entschäumungsmittel, die notwendig ist, um in diesem Zeitraum das Schaumvolumen auf ≦ 1000 ml zu halten, wird notiert. Die Einzeldosierung von 0,2 g einer 10 %igen Verdünnung des Entschäumungsmittels entspricht einem Zusatz von 20 ppm, bezogen auf die Tensidlösung.

Der oben beschriebene Test wird sowohl in der neutralen als auch in einer 2 % NaOH enthaltenden Tensidlösung durchgeführt.

Die Entschäumungsmittel 1 bis 13 werden für diesen Test mit Toluol auf einen Gehalt von 10 % verdünnt. Die Verdünnung auf 10 % erfolgt bei den Entschäumungsmitteln 14 bis 17 mit deionisiertem Wasser.

| Entschäumungsmittel | Verhältnis * NH₂ : Σ Si | Entschäumerbedarf in ppm | |
|---|---|---|---|
| | | Sincal (neutral) | Sincal (alk.) |
| 1 | 1 : 66 | 260 | 160 |
| 2 | 1 : 136 | 240 | 140 |
| 3 | 1 : 256 | 160 | 120 |
| 4 | 1 : 203 | 100 | 40 |
| 5 | 1 : 203 | 80 | 60 |
| 6 | 1 : 203 | 60 | 40 |
| 7 | 1 : 203 | 80 | 20 |
| 8 | 1 : 102 | 60 | 60 |
| # 9 | | 80 | 780 |
| # 10 | 1 : 31 | 380 | 300 |
| # 11 | 1 : 16 | 400 | 340 |
| # 12 | 1 : 27 | 380 | 320 |
| # 13 | 1 : 33 | 480 | 480 |
| 14 | 1 : 203 | 40 | 20 |
| 15 | 1 : 203 | 40 | 40 |
| # 16 | | 80 | >1000 |
| # 17 | 1 : 16 | 260 | 380 |

| | | | |
|---|---|---|---|
| * Verhältnis der Zahl der Reste R² mit der Definition (2) zu der Gesamtzahl der Si-Atome | | | |
| # nicht erfindungsgemäß (Vergleich) | | | |

Die Werte in der Tabelle belegen die bessere Wirksamkeit der erfindungsgemäßen Mittel im Vergleich zu unmodifizierten Polydimethylsiloxanen (Beispiele 9 und 16) und zu aminofunktionellen Siloxanen, die der Auswahlregel (Verhältnis der Zahl der Reste R² mit der Definition (2) zu der Gesamtzahl der Si-Atome) nicht entsprechen (Beispiele 10, 11, 12, 13 und 17).

## Patentansprüche

1. Mittel zum Entschäumen wäßriger, insbesondere alkalischer Zubereitungen auf der Basis von organofunktionell modifizierten Organopolysiloxanen und feinteiliger Kieselsäure, dadurch gekennzeichnet, daß es als organofunktionell modifizierte Organopolysiloxane Aminosiloxane, deren Aminogruppen über Si-C- oder SiOC-Bindungen mit dem Organopolysiloxan verbunden sind und bei denen das Verhältnis von Aminogruppen zu Si-Atomen des Organopolysiloxans 1 : 50 bis 1 : 500 beträgt, enthält.

2. Mittel nach Anspruch 1, dadurch gekennzeichnet, daß es als Aminosiloxane Verbindungen der allgemeinen Formel 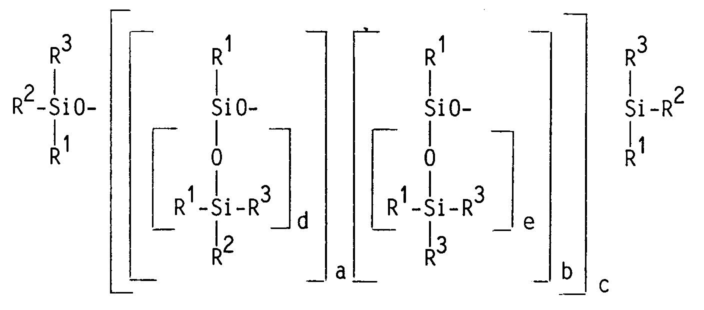 enthält, wobei die Reste
R¹ im Molekül gleich oder verschieden sind und Alkylreste, Phenylreste, Alkoxyreste mit bis zu 18 Kohlenstoffatomen oder Hydroxylreste bedeuten, jedoch mindestens 90 % der Reste Methylreste sind,
R² im Molekül gleich oder verschieden sind und
(1) die Bedeutung der Reste R¹ haben oder
(2) organische Reste sind, die jeweils über ein Kohlenstoff- oder Sauerstoffatom mit einem Siliciumatom des Organopolysiloxans verbunden sind und eine Aminogruppe aufweisen,
R³ im Molekül gleich oder verschieden sind und
(1) die Bedeutung der Reste R¹ haben oder
(2) Polyetherreste sind, die jeweils über ein Kohlenstoff- oder Sauerstoffatom mit einem Siliciumatom des Organopolysiloxans verbunden sind,
und die Indices
a einen Wert von 0 bis 5,
b einen Wert von 100 bis 500,
c einen Wert von 1 bis 5,
d einen Wert von 0 bis 5 und
e einen Wert von 0 bis 5 haben
wobei das Verhältnis der Zahl der Reste R² mit der Definition (2) zu der Gesamtzahl der Siliciumatome 1 : 50 bis 1 : 500 beträgt.

3. Mittel nach Anspruch 2, dadurch gekennzeichnet, daß die Reste R² mit der Definition (2) die allgemeine Formel
-(CH₂)_{f}-NH₂, 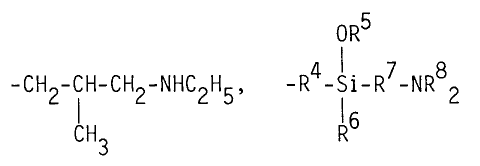 oder -(CH₂)₃NH(CH₂)₂NH₂
aufweisen, wobei
R⁴ ein Rest der Formel -(CH₂)ₑ-O- ist, in der e eine ganze Zahl von 3 bis 20 ist,
R⁵ ein Alkylrest mit 1 bis 6 Kohlenstoffatomen ist,
R⁶ ein Alkylrest mit 1 bis 4 Kohlenstoffatomen ist oder dem Rest OR⁵ entspricht,
R⁷ ein Rest der Formel -CH₂-, -(CH₂)₂-NH-(CH₂)₃ oder 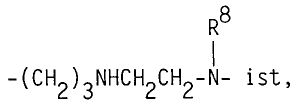
R⁸ ein Alkylrest mit 1 bis 4 Kohlenstoffatomen oder ein Wasserstoffrest ist und
f einen Wert von 3 bis 20 hat.

4. Mittel nach einem oder mehreren der vorhergehenden Ansprüche, dadurch gekennzeichnet, daß es als Wirkstoff
10 bis 100 Gew.-% des Aminosiloxans und
0 bis 90 Gew.-% unmodifiziertes Organopolysiloxan
enthält, wobei der Wirkstoff in einem organischen Lösungsmittel gelöst sein kann, und das Mittel, bezogen auf Gesamtgewicht, 1,5 bis 10 Gew.-% Kieselsäure enthält.

5. Mittel nach Anspruch 4, dadurch gekennzeichnet, daß das unmodifizierte Organopolysiloxan ganz oder teilweise durch ein Polyethergruppen aufweisendes Organopolysiloxan ersetzt ist.

6. Verwendung der Mittel nach einem oder mehreren der vorhergehenden Ansprüche zum Entschäumen wäßriger, insbesondere alkalischer Zubereitungen.

7. Verwendung der Mittel nach Anspruch 6 in Emulsionsform.
